# EUROPÄISCHE PATENTSCHRIFT

(11) **EP 1 198 893 B1**
(45) Veröffentlichungstag und Bekanntmachung des Hinweises auf die Patenterteilung: **12.02.2003**
(21) Anmeldenummer: 00958126.5
(22) Anmeldetag: 14.07.2000
(51) Int. Cl.: H03M 13/29, H03M 13/35, H03M 13/27, H04L 1/00

(54) **VERFAHREN UND EINRICHTUNG ZUR ERZEUGUNG EINES RATENKOMPATIBLEN CODES**
METHOD AND DEVICE FOR THE GENERATION OF A RATE COMPATIBLE CODE
PROCEDE ET DISPOSITIF POUR GENERER UN CODE A DEBIT COMPATIBLE

(30) Priorität: 29.07.1999 DE 19935785
(43) Veröffentlichungstag der Anmeldung: 24.04.2002
(73) Patentinhaber: Infineon Technologies AG, 81669 München (DE)
(72) Erfinder: SCHNEIDER, Michael, D-81541 München (DE); KELLA, Tideya, D-80337 München (DE); DOETSCH, Markus, CH-3098 Schliern (CH); JUNG, Peter, D-67697 Otterberg (DE); PLECHINGER, Jörg, D-80469 München (DE); SCHMIDT, Peter, D-67167 Erpolzheim (DE)
(74) Vertreter: Lange, Thomas, Dr.
(86) Internationale Anmeldenummer: DE0002302
(87) Internationale Veröffentlichungsnummer: WO01010041

(56) Entgegenhaltungen:
- EP-A- 0 980 148
- WO-A-98/44638
- WO-A-99/07076
- US-A- 5 414 738
- MATSUOKA H ET AL: "ADAPTIVE MODULATION SYSTEM WITH VARIABLE CODING RATE CONCATENATED CODE FOR HIGH QUALITY MULTI-MEDIA COMMUNICATION SYSTEMS" IEEE VEHICULAR TECHNOLOGY CONFERENCE,US,NEW YORK, IEEE, Bd. CONF. 46, 28. April 1996 (1996-04-28), Seiten 487-491, XP000594323 ISBN: 0-7803-3158-3
- CYGAN D ET AL: "A CONCATENATED TWO-STAGE ADAPTIVE (CTSA) ERROR CONTROL SCHEME FOR DATA STRANSMISSION IN TIME-VARYING CHANNELS" IEEE TRANSACTIONS ON COMMUNICATIONS,US,IEEE INC. NEW YORK, Bd. 43, Nr. 2/04, PART 02, 1. Februar 1995 (1995-02-01), Seiten 795-803, XP000502588 ISSN: 0090-6778
- BENEDETTO S ET AL: "ANALYSIS, DESIGN, AND ITERATIVE DECODING OF DOUBLE SERIALLY CONCATENATED CODES WITH INTERLEAVERS" IEEE JOURNAL ON SELECTED AREAS IN COMMUNICATIONS,US,IEEE INC. NEW YORK, Bd. 16, Nr. 2, 1. Februar 1998 (1998-02-01), Seiten 231-244, XP000741777 ISSN: 0733-8716

## Beschreibung

Die Erfindung betrifft ein Verfahren und eine Einrichtung zur Erzeugung eines seriell verketteten Codes vorgebbarer Coderate zur Übertragung einer Nachricht über einen Kanal, insbesondere Funkkanal.

Mit einer Kanalcodierung wird generell bezweckt, eine zu übertragende - eventuell in einem vorgeschalteten Quellencodierer aufbereitete - Nachricht und ihre Signaldarstellung möglichst optimal an die Eigenschaften des Übertragungskanals (Funkkanals) anzupassen. Dazu gehört insbesondere die Sicherung der Nachricht gegen Störungen.

Die Sicherung der Nachricht gegen Störungen wird dadurch erreicht, daß bei der Kanalcodierung Redundanz in die zu übertragende Nachricht eingebaut wird. Dabei ist die Einfügung von übermäßig viel Redundanz auch wiederum nachteilig, da sie nur noch einen sehr geringen oder keinen Wahrnehmbaren Gewinn für den Nutzer bewirkt, jedoch den benötigten Frequenzbereich für die Übertragung der Nachricht in unerwünschter Weise erhöht.

In zukünftigen Mobilfunksystemen der dritten Generation werden verkettete (Kanal)Codes für eine Datenübertragung über die Luftschnittstelle eingesetzt. Neben parallel verketteten Codes sind seriell verkettete Codes, insbesondere Faltungscodes einer der möglichen Kandidaten für eine solche Datenübertragung

Ferner wird in modernen Mobilfunksystemen eine Vielzahl von Diensten (Services) angeboten. Die Dienste weisen in der Regel sowohl verschiedene Datenübertragungsraten als auch unterschiedliche Erfordernisse in Hinblick auf die erforderliche Übertragungsqualität auf. Höherratige Dienste werden in Mobilfunksystemen vorzugsweise durch Paketübertragung realisiert. Die benötigte Dienstqualität kann durch die maximal erlaubte Bitfehlerrate (beispielsweise bei Sprache 10⁻³ und bei Datendiensten 10⁻⁶) beschrieben werden.

In dem Artikel "Adaptive Modulation System with Variable Coding Rate Concatenated Code for High Quality Multi-Media Communication Systems", Matsuoka et al., IEEE Vehicular Technologie Conference, New-York, Conf. 46, 28.4.1996, Seiten 487 bis 491, ist ein Verfahren zur Realisierung eines Kanalcodes beschrieben, gemäß welchem ein äußerer RS-Code mit einem inneren Faltungscode seriell verkettet wird. Der innere Faltungscode kann dabei zur Ratensteuerung punktiert werden.

In der internationalen Patentanmeldung WO 98/48517 ist ein Turbo-Codierer beschrieben. Gemäß üblicher Bauart eines Turbo-Codierers wird ein faltungscodierter Datenstrom und ein verschachtelter faltungscodierter Datenstrom erzeugt. Diese beiden Datenströme können wahlweise einer Punktierung zur Signalratenveränderung unterzogen werden.

Der Erfindung liegt die Aufgabe zugrunde, ein Verfahren sowie eine Einrichtung anzugeben, mit dem bzw. der bei Verwendung von seriell verketteten Kanalcodes eine flexible, frequenzökonomische und an die Erfordernisse der unterstützten Dienste angepaßte Übertragung von Nachrichten ermöglicht wird.

Zur Lösung der Aufgabe sind die Merkmale der Ansprüche 1 und 9 vorgesehen.

Durch den in der Codiereinrichtung integrierten steuerbaren Punktierer kann die Coderate flexibel auf einen gewünschten Wert eingestellt werden. Damit kann eine resourcenschonende und frequenzökonomische Datenübertragung über den Funkkanal vorgenommen werden. Die Coderate R ist in üblicher Weise als das Verhältnis k/n definiert, wobei n die Anzahl von Datensymbolen ist, die am Ausgang der Codiereinrichtung in Antwort auf k in die Codiereinrichtung eingegebene Datensymbole (durch Hinzufügung von r Redundanz-Datensymbolen) bereitgestellt wird, d.h. n = k + r.

Der steuerbare Punktierer (P1, P2) ist im Signalweg zwischen den beiden Codierstufen (FC1, FC2) angeordnet. Der Punktierer wird dann auf ein bereits teilweise codiertes Nachrichtensignal angewendet und bewirkt neben der Coderatensteuerung auch eine (ebenfalls steuerbare) Änderung des von der Codiereinrichtung erzeugten Codes.

Die Funktionsweise des Punktierers besteht darin, einzelne Datensymbole (Bits) aus dem den Punktierer durchlaufenden Datenstrom zu eliminieren. Damit bewirkt der Punktierer eine Erhöhung der Coderate R im Vergleich zu dem Fall ohne Punktierer (bzw. zu dem im Rahmen der Erfindung liegenden Fall, daß der Punktierer auf "Durchlauf" geschaltet ist).

Nach einer bevorzugten Ausgestaltung der Erfindung erfolgt die Steuerung des Punktierers in Abhängigkeit von dem zu übertragenden Dienst. Dadurch kann sichergestellt werden, daß bei Diensten, die eine niedrige Bitfehlerrate (d.h. höhere Übertragungsqualität) benötigen, eine geringere Coderate (d.h. mehr hinzugefügte Redundanz) eingesetzt wird.

Eine weitere bevorzugte Variante des erfindungsgemäßen Verfahrens kennzeichnet sich dadurch, daß die Steuerung des Punktierers in Abhängigkeit von einem für das Empfängerverhalten charakteristischen Rückmeldesignals erfolgt. In diesem Fall kann die Einstellung der Coderate R in einem Regelkreis unter Miteinbeziehung der Luftschnittstelle erfolgen. Sobald der Empfänger feststellt, daß situativ eine nicht ausreichende Empfangsqualität vorliegt, kann er dies dem (Kanal)codierer des Senders über das Rückmeldesignal mitteilen, woraufhin dieser durch eine Verminderung der Punktierhäufigkeit die Coderate erniedrigt und damit für eine störungsfestere Ubertragung und einen durch eine niedrigere Bitfehlerrate gekennzeichneten Empfang am Empfänger sorgt.

In der beschriebenen Weise kann erreicht werden, daß durch Steuerung des Punktierers eine zur Gewährleistung einer empfangsseitig vorgegebenen maximalen Bitfehlerrate gerade noch ausreichende (maximale) Coderate eingestellt wird. Ein derartiger Betrieb kann auch als "Coderatentuning" bezeichnet werden.

Wesentliche Vorteile bietet das erfindungsgemäße Verfahren insbesondere dann, wenn das zu übertragende Nachrichtensignal aus Datenpaketen aufgebaut ist, d.h. eine paketvermittelte Datenübertragung vorgesehen ist. In diesem Fall kennzeichnet sich eine besonders bevorzugte Verfahrensvariante dadurch, daß bei einem nicht vollständig und/oder fehlerhaft über den Kanal übertragenen Paket empfängerseitig eine Wiederholung der Übertragung des nicht und/oder fehlerhaft empfangenen Datenteils des Paketes angefordert wird, und daß bei der dann erfolgenden zweiten Übertragung lediglich der nicht oder fehlerhaft übertragene Datenteil noch einmal übertragen wird, wobei eine niedrigere Coderate eingestellt wird.

Vorzugsweise handelt es sich bei dem erzeugten Code um einen Turbo-Code, wobei sich vorteilhaft auswirkt, daß der iterativen Turbo-Decodierung des seriell verketteten Codes eine Anpassung des Decodieraufwands (beispielsweise durch Wahl der Anzahl der durchzuführenden Iterationsschleifen) an das geforderte Systemverhalten möglich ist.

Eine bevorzugte Ausgestaltung der erfindungsgemäßen Codiereinrichtung kennzeichnet sich dadurch, daß im Signalweg zwischen den beiden Codierstufen ein Verschachteler vorgesehen ist. Durch den Verschachteler kann der Hammingabstand des erzeugten Codes (d.h. der Minimalabstand zwischen zwei Codewörtern) vergrößert werden, wodurch im Empfänger eine sicherere und damit fehlertolerantere Decodierung des Codes ermöglicht wird, d.h. bei gleicher Redundanz eine kleinere Bitfehlerrate erreicht werden kann.

Die Codierstufen können allgemein sowohl durch Blockcodierer als auch durch Faltungscodierer realisiert sein, und es kann auch vorgesehen sein, daß eine Codierstufe ein Faltungscodierer und die andere Codierstufe ein Blockcodierer ist. Vorzugsweise sind die Codierstufen jedoch durch zwei identische, rekursive systematische Faltungscodierer realisiert.

Weitere vorteilhafte Ausgestaltungen der Erfindung sind in den Unteransprüchen angegeben.

Die Erfindung wird nachfolgend anhand eines Ausführungsbeispiels unter Bezugnahme auf die Zeichnung näher erläutert; in dieser zeigt:
- Fig. 1: eine schematische Darstellung der Luftschnittstelle eines Mobilfunksystems mit Sender und Empfänger; und
- Fig. 2: ein Blockschaltbild einer erfindungsgemäßen Codiereinrichtung zur Erzeugung eines kanalcodierten Nachrichtensignals im Sender.

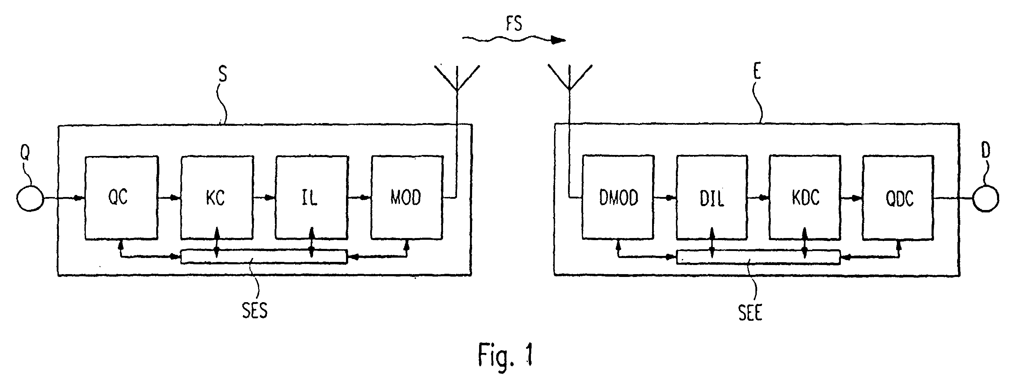

Fig. 1 zeigt einen Sender S und einen Empfänger E eines Mobilfunksystems. Der Sender S bzw. der Empfänger E können sowohl einer Basisstation als auch einer Mobilstation eines insbesondere zellularen Mobilfunksystems zugeordnet sein.

Eine Nachrichtenquelle Q, beispielsweise Mikrophon, Kamera usw. erzeugt eine zu übertragende Nachricht. Die zu übertragende Nachricht kann sowohl in Form eines Analogsignals (beispielsweise Sprach-, Musik-, Videosignal) als auch in Form eines digitalen Signals (beispielsweise Speicherinhalt eines digitalen Sprach-, Musik-, Bildspeichers) vorliegen. Die Nachricht wird sodann einem Quellencodierer QC zugeführt, wobei im erstgenannten Fall (analoges Nachrichtensignal) zuvor eine Analog-Digital-Umsetzung des Nachrichtensignals vorgenommen wird. Der Quellencodierer QC setzt das empfangene digitale Nachrichtensignal in ein digitales Signal mit geringerer Redundanz um. Er bewirkt somit eine Informationsverdichtung oder Datenkompression, die ermöglicht, daß die nachfolgende Datenverarbeitung und -übertragung grundsätzlich mit einer niedrigeren Datenrate erfolgen kann.

Ist eine paketvermittelte Datenübertragung vorgesehen, wird in dem Quellencodierer QC ferner eine Einteilung der Nachrichtendaten in einzelne Datenpakete vorgenommen.

Ein Kanalcodierer KC nimmt die quellencodierten Nachrichtendaten entgegen und führt in noch näher zu beschreibender Weise eine an den Übertragungskanal angepaßte Kanalcodierung mit einstellbarer Coderate R durch.

Ein dem Kanalcodierer KC nachgeschalteter optionaler Verschachteler IL hat ebenfalls eine Verbesserung der Fehlersicherheit der empfangenen Nachricht zum Ziel. Durch die sendeseitige Verschachtelung des zu übertragenden, kanalcodierten Nachrichtensignals wird bei der Decodierung im Empfänger die statistische Unabhängigkeit auftretender Detektionsfehler in gewünschter Weise erhöht.

Dem Verschachteler IL ist ein Modulator MOD nachgeschaltet, der in nicht näher dargestellter Weise einen Blockbildner, die eigentliche Modulatorstufe, einen Sendefilter und einen Sendeverstärker enthalten kann. Das von dem Modulator MOD ausgegebene hochfrequente, auf einem Träger aufmodulierte Funksignal FS wird über die Luftschnittstelle übertragen und von dem Empfänger E empfangen.

Das empfangene Nachrichtensignal wird zunächst in einem Demodulator DMOD demoduliert. Der Demodulator umfaßt in nicht näher dargestellter Weise einen Empfangsverstärker, ein Empfangsfilter, einen Analog-zu-Digital-Umsetzer und einen adaptiven, kohärenten Datendetektor.

Der adaptive, kohärente Datendetektor führt eine an den momentanen Zustand des Übertragungskanals (Luftschnittstelle) angepaßte Detektion des übertragenen Nachrichtensignals unter Berücksichtigung des Betrags und der Phase der Empfangsfeldstärke des Funksignals FS durch. An seinem Ausgang stellt der Demodulator DMOD eine Datensymbolfolge bereit, die eine Rekonstruktion der sendeseitig von dem Modulator MOD entgegengenommenen Datensymbolfolge ist.

Die von dem Demodulator DMOD ausgegebene Datensymbolfolge wird von einem Entschachteler DIL wieder in die richtige Reihenfolge gebracht (d.h. die von dem Verschachteler IL bewirkte Datensymbol-Verschachtelung wird rückgängig gemacht) und einem Kanaldecodierer KDC zugeleitet.

Der Kanaldecodierer KDC führt eine Decodierung der detektierten, codierten Datensymbole gemäß dem in dem Codierer KC verwendeten Kanalcode durch. Um das Arbeiten des Kanaldecodierers KDC zu unterstützen, und die Anzahl der korrigierbaren Detektionsfehler zu erhöhen, kann vom adaptiven kohärenten Datendetektor zu jedem detektierten Datensymbol eine Zuverlässigkeitsinformation erzeugt und dem Kanaldecodierer mitgeteilt werden (sog. "soft decision"). Der Kanaldecodierer KDC erzeugt ein Datensignal, dessen Datensymbole Rekonstruktionen der sendeseitig von dem Kanalcodierer KC erhaltenen Datensymbole sind.

Ein Datensymbol wird entweder falsch oder richtig rekonstruiert. Die Bitfehlerrate gibt die relative Häufigkeit falsch rekonstruierter Datensymbole an.

Die von dem Kanaldecodierer KDC decodierten Datensymbole werden in einem Quellendecodierer QDC quellendecodiert, gegebenenfalls in ein analoges Datensignal gewandelt und einer geeigneten Nachrichtensenke (Lautsprecher, Display usw.) zugeführt.

Eine im Sender S vorgesehene Steuereinrichtung SES steuert die Datenverarbeitungseinheiten QC, KC, IL, MOD und steht zu diesem Zweck mit diesen in bidirektionaler Datenverbindung. In analoger Weise werden die in dem Empfänger E angeordneten Datenverarbeitungseinheiten DMOD, DIL, KDC, QDC von einer Steuereinrichtung SEE des Empfängers E gesteuert.

Wesentlich für die Erfindung ist, daß der Kanalcodierer KC einen seriell verketteten Code mit einer einstellbaren Coderate R erzeugt. Die Einstellung der Coderate R wird über die Steuereinrichtung SES des Senders S vorgenommen, wie dies nachfolgend noch näher erläutert wird.

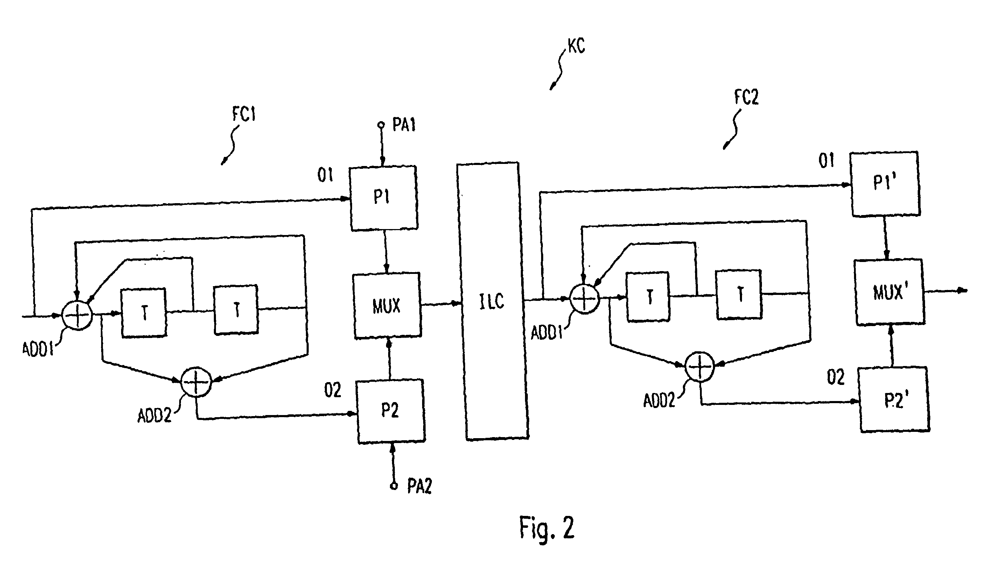

Fig. 2 zeigt ein spezielles Ausführungsbeispiel des in Fig. 1 gezeigten Kanalcodierers KC.

Der Kanalcodierer KC umfaßt einen ersten rekursiven systematischen Faltungscodierer FC1, eine Coderaten-Erhöhungsstufe, die hier aus zwei Punktierern P1, P2 und einem Multiplexer MUX aufgebaut ist, einen der Coderaten-Erhöhungsstufe P1/P2/MUX nachgeschalteten Verschachteler ILC, einen zweiten rekursiven systematischen Faltungscodierer FC2 und eine weitere (optionale) Coderaten-Erhöhungsstufe. Die zweite Coderaten-Erhöhungsstufe kann konstruktiv identisch mit der ersten Coderaten-Erhöhungsstufe ausgebildet sein, d.h. ebenfalls aus zwei Punktierern P1', P2' und einem Multiplexer MUX' bestehen.

Jeder Faltungscodierer FC1, FC2 weist eingangsseitig einen ersten Addierer ADD1 und ein dem Addierer ADD1 nachgeschaltetes Schieberegister mit zwei Zellen T auf. Die Faltungscodierer FC1, FC2 weisen jeweils einen ersten Ausgang O1 auf, an dem eine Datensymbolfolge ausgegeben wird, deren Elemente (Datensymbole) identisch mit den ursprünglich empfangenen Datensymbolen sind. Codierer mit dieser Eigenschaft werden als systematische Codierer bezeichnet. An einem zweiten Ausgang O2 stellt der Faltungscodierer FC1 bzw. FC2 eine Redundanz-Datensymbolfolge bereit, die von einem zweiten Addierer ADD2 gebildet wird. Es wird deutlich, daß ein zu einem bestimmten Zeitpunkt an dem zweiten Ausgang O2 vorliegendes Redundanz-Datensymbol (Redundanzbit) von dem Eingangsbit sowie den in den zwei Zellen gespeicherten vorhergehenden Datensymbolen abhängig ist. Die Faltungscodierer FC1, FC2 besitzen daher die Rückgrifftiefe 3.

Da pro Eingangs-Datensymbol genau ein Redundanz-Datensymbol erzeugt wird, beträgt die Coderate des ersten Faltungscodierers FC1 sowie auch die Coderate des zweiten Faltungscodierers FC2 jeweils 0,5.

Der Punktierer P1 nimmt die an dem Ausgang 01 bereitgestellte systematische (d.h. unveränderte) Datensymbolfolge entgegen. Die am Ausgang O2 des ersten Faltungscodierers FC1 bereitgestellte Redundanz-Datensymbolfolge wird dem zweiten Punktierer P2 zugeführt. Zumindest einer der beiden Punktierer P1, P2, in der Regel jedoch beide weisen einen Steuereingang auf. Über diesen Steuereingang wird dem Punktierer P1 bzw. P2 eine von der Steuereinrichtung SES ausgegebene Punktieranweisung PA1 bzw. PA2 mitgeteilt. Die Punktieranweisung PA1 bzw. PA2 gibt jeweils ein Punktiermuster an, gemäß dem die den jeweiligen Punktierer durchlaufende systematische bzw. Redundanz-Datensymbolfolge zu punktieren ist.

Beispielsweise kann das Punktiermuster "xx0xx0xx0xx0..." lauten. Dabei bedeutet x "punktieren" und 0 bedeutet "nicht punktieren". Bei einer solchen Punktieranweisung PA1 bzw. PA2 werden demnach immer zwei Datensymbole punktiert, d.h. aus der Datenfolge eliminiert, und eines weitergeleitet.

Die von den Punktierern P1, P2 weitergeleiteten und in dem Multiplexer MUX multiplexierten Datensymbole werden nach einer blockweisen oder konvolutionalen Verschachtelung im Verschachteler ILC wie bereits beschrieben dem zweiten Faltungscodierer FC2 zugeführt und dort - im vorliegenden Beispiel in gleicher Weise wie im ersten Faltungscodierer FC1 - weiterverarbeitet, d.h. "fertigcodiert". Die Punktierer P1', P2' können wie die Punktierer P1, P2 steuerbar sein; sie können jedoch auch mit einem festen Punktiermuster arbeiten oder vollständig entfallen, wobei die letztere Möglichkeit dem Punktiermuster "0000000..." entspricht.

Das codierte Nachrichtensignal steht am Ausgang des Multiplexers MUX' zur Verfügung.

Die mit dem Kanalcodierer KC minimal erzielbare Coderate R (entspricht maximaler Redundanz) beträgt 1/4. Die in Fig. 2 dargestellten systematischen, rekursiven Faltungscodierer FC1, FC2 mit Rückgrifftiefe 3 können durch Codepolynome 7 und 5 in oktaler Notation beschrieben werden. Durch die erfindungsgemäße Ansteuerung der Punktierer P1 und/oder P2 und gegebenenfalls P1' und/oder P2' kann die Coderate in gewünschter Weise variiert werden.

Die Variation der Coderate ermöglicht Ratenkompatibilität und Bitfehlertuning.

Bei einer Paketübertragung kann beispielsweise ein hybrides sog. ARQ-(Automatic Repeat Request)Verfahren vom Typ 2 unterstützt werden. Ein solches Verfahren zeichnet sich dadurch aus, daß bei einer fehlerhaften Übermittlung eines Datenpakets vom Empfänger nicht die Wiederholung des gesamten Datenpakets sondern lediglich eines Teils desselben angefordert wird (während der korrekt übertragenen Teil im Empfänger zwischengespeichert wird). Dabei ermöglicht die Erfindung, die zweite Übertragung mit einer erniedrigten Coderate R durchzuführen und damit die Wahrscheinlichkeit für eine fehlerfreie Übertragung des restlichen Datenteils beïm zweiten Versuch wesentlich zu erhöhen. Letzteres ist wichtig, um die Echtzeitfähigkeit der Übermittlung gewährleisten zu können.

Mit dem erfindungsgemäßen Verfahren bzw. der erfindungsgemäßen Codiereinrichtung können grundsätzlich alle zur Gruppe der seriell verketteten Codes gehörende Codes erzeugt werden. Dazu zählen alle möglichen Kombinationen von Verkettungen, z.B. Faltungscode mit Faltungscode (hierzu gehören auch Turbo-Codes), Faltungscode mit Blockcode oder Blockcode mit Blockcode. Beispiele für Blockcodes sind ein QR-(Quadratische Reste)Code oder ein RS-(Reed-Solomon)Code. Die Einstellung der Coderate R kann sowohl in Abhängigkeit von sendeseitigen Parametern (beispielsweise Codewahl, Sendeleistung, gewünschter Dienst usw.) als auch in Abhängigkeit von - ggf. in Art einer Rückkopplung dem Sender mitgeteilten - empfangsseitigen Parametern (Empfangsleistung, Bitfehlerrate usw.) eingestellt werden. Beispielsweise kann im Empfänger E durch einen einfachen Parity-Check die fehlerhafte Übertragung eines empfangenen Datenblocks festgestellt oder durch eine Berechnung der Varianz der den empfangenen Datensymbolen zugeordneten Zuverlässigkeitsinformationen die Bitfehlerrate geschätzt werden. In Abhängigkeit von dem Ergebnis des Parity-Checks und/oder der geschätzten Bitfehlerrate kann eine Rückmeldung zur Erhöhung/Erniedrigung der Coderate R an den Sender abgesetzt werden.

Der erfindungsgemäße Kanalcodierer KC kann auch aus mehr als zwei seriell hintereinander liegenden Codierstufen FC1, FC2 aufgebaut sein, und es kann auch ein kaskadenförmiger Aufbau bestehend aus alternierend angeordneten Codierstufen und steuerbaren Coderaten-Erhöhungsstufen vorgesehen sein.

## Patentansprüche

1. Verfahren zur Erzeugung eines seriell verketteten Codes vorgebbarer Coderate zur Übertragung einer Nachricht über einen Kanal, insbesondere Funkkanal, das die Schritte aufweist:
- Entgegennehmen eines zu codierenden Nachrichtensignals;
- erstes Codieren des Nachrichtensignals mittels einer ersten Codierstufe (FC1);
- zweites Codieren des Nachrichtensignals mittels einer ausgangsseitig der ersten Codierstufe (FC1) vorgesehenen zweiten Codierstufe (FC2); und
- Ausgeben eines die beiden Codierstufen (FC1, FC2) durchlaufenen codierten Nachrichtensignals;
**dadurch gekennzeichnet,**
- **daß** durch einen im Signalweg zwischen den beiden Codierstufen (FC1, FC2) angeordneten steuerbaren Punktierer (P1, P2) die Coderate R des ausgegebenen codierten Nachrichtensignals in vorgebbarer Weise einstellbar ist.

2. Verfahren nach Anspruch 1,
**dadurch gekennzeichnet,**
**daß** die Steuerung des Punktierers (P1, P2) in Abhängigkeit von dem zu übertragenden Dienst erfolgt.

3. Verfahren nach Anspruch 1 oder 2,
**dadurch gekennzeichnet,**
**daß** die Steuerung des Punktierers (P1, P2) in Abhängigkeit von einem für das Empfängerverhalten charakteristischen Rückmeldesignals erfolgt.

4. Verfahren nach Anspruch 3,
**dadurch gekennzeichnet,**
**daß** durch Steuerung des Punktierers (P1, P2) eine zur Gewährleistung einer empfangsseitig vorgegebenen maximalen Bitfehlerrate gerade ausreichende Coderate R eingestellt wird.

5. Verfahren nach einem der vorhergehenden Ansprüche,
**dadurch gekennzeichnet,**
**daß** die erste Codierstufe (FC1) ein systematischer Faltungscodierer ist, welcher eine systematische Datenfolge und eine Redundanz-Datenfolge ausgibt, mit dem Schritt:
- Punktieren der beiden ausgegebenen Datenfolgen.

6. Verfahren nach einem der vorhergehenden Ansprüche,
**dadurch gekennzeichnet,**
**daß** das Nachrichtensignal aus Datenpaketen zur Realisierung einer paketvermittelten Datenübertragung aufgebaut ist.

7. Verfahren nach Anspruch 6,
**dadurch gekennzeichnet,**
**daß** bei einem nicht vollständig und/oder fehlerhaft über den Kanal übertragenen Paket empfängerseitig eine Wiederholung der Übertragung des nicht und/oder fehlerhaft empfangenen Datenteils des Paketes angefordert wird, und daß bei der dann erfolgenden zweiten Übertragung lediglich der nicht oder fehlerhaft übertragene Datenteil übertragen wird, wobei eine niedrigere Coderate R eingestellt wird.

8. Verfahren nach einem der vorhergehenden Ansprüche,
**dadurch gekennzeichnet,**
**daß** es sich bei dem erzeugten Code um einen Turbo-Code handelt.

9. Einrichtung zur Codierung eines über einen Kanal, insbesondere Funkkanal zu übertragenden Nachrichtensignals, mit
- einer ersten Codierstufe (FC1), in welcher das Nachrichtensignal einer ersten Codierung unterzogen wird, und
- einer zweiten Codierstufe (FC2), welche im Signalweg hinter der ersten Codierstufe (FC1) angeordnet ist, und
- einem im Signalweg angeordneten steuerbaren Punktierer (P1, P2), mittels dem die Coderate R des von der Codiereinrichtung (KC) ausgegebenen codierten Nachrichtensignals in vorgebbarer Weise einstellbar ist,
**dadurch gekennzeichnet,**
**daß** der steuerbare Punktierer (P1, P2) im Signalweg zwischen den beiden Codierstufen (FC1, FC2) angeordnet ist.

10. Einrichtung nach Anspruch 9,
**dadurch gekennzeichnet,**
**daß** die beiden Codierstufen (FC1, FC2) Faltungscodierer sind.

11. Einrichtung nach Anspruch 9 oder 10,
**dadurch gekennzeichnet,**
- **daß** die zumindest die erste Codierstufe (FC1) ein rekursiver systematischer Faltungscodierer mit einem Ausgang (O1) für eine systematische Datenfolge und einem Ausgang (O2) für eine Redundanz-Datenfolge ist, und daß jedem Ausgang (O1, O2) ein steuerbarer Punktierer (P1, P2) nachgeschaltet ist.

12. Einrichtung nach einem der Ansprüche 9 bis 11,
**dadurch gekennzeichnet,**
**daß** im Signalweg zwischen den beiden Codierstufen (FC1, FC2) ein Verschachteler (ILC) vorgesehen ist.

13. Einrichtung nach einem der Ansprüche 9 bis 12,
**dadurch gekennzeichnet,**
**daß** im Signalweg hinter der zweiten Codierstufe (FC2) ein weiterer Verschachteler (IL) vorgesehen ist.

## Claims

1. Method for generating a serially concatenated code of predeterminable code rate for transmitting a message via a channel, particularly a radio channel, exhibiting the following steps:
- receiving a message signal to be coded;
- first coding of the message signal by means of a first coding stage (FC1);
- second coding of the message signal by means of a second coding stage (FC2) provided at the output of the first coding stage (FC1); and
- outputting a coded message signal passing through the two coding stages (FC1, FC2);
**characterized in that**
- the code rate R of the coded message signal output can be adjusted in a predeterminable manner via a controllable puncturing device (P1, P2) arranged on the signal path between the two coding stages (FC1, FC2).

2. Method according to Claim 1,
**characterized in that** the puncturing device (P1, P2) is controlled in dependence on the service to be transmitted.

3. Method according to Claim 1 or 2,
**characterized in that** the puncturing device (P1, P2) is controlled in dependence on a return signal characteristic of the receiver behaviour.

4. Method according to Claim 3,
**characterized in that** a code rate R, which is just sufficient for ensuring a maximum bit error rate predetermined at the receiving end, is adjusted by controlling the puncturing device (P1, P2).

5. Method according to one of the preceding claims,
**characterized in that** the first coding stage (FC1) is a systematic convolutional coder which outputs a systematic data sequence and a redundant data sequence, comprising the following step:
- puncturing of the two data sequences output.

6. Method according to one of the preceding claims,
**characterized in that** the message signal is built up from data packets for implementing a packet-switched data transmission.

7. Method according to Claim 6, **characterized in that**, in the case of a packet transmitted incompletely and/or with errors via the channel, a retransmission of the data part of the packet, which was not received and/or received with errors, is requested at the receiver end and **in that**, in the second transmission then taking place, only the data part not transmitted or transmitted with errors is transmitted and a lower code rate R is set.

8. Method according to one of the preceding claims,
**characterized in that** the code generated is a turbo code.

9. Device for coding a message signal to be transmitted via a channel, particularly a radio channel, comprising
- a first coding stage (FC1) in which the message signal is subjected to first coding, and
- a second coding stage (FC2) which is arranged behind the first coding stage (FC1) on the signal path, and
- a controllable puncturing device (P1, P2) arranged on the signal path, by means of which the code rate R of the coded message signal output by the coding device (KC) can be adjusted in a predeterminable manner,
**characterized in that**
the controllable puncturing device (P1, P2) is arranged on the signal path between the two coding stages (FC1, FC2).

10. Device according to Claim 9, **characterized in that** the two coding stages (FC1, FC2) are convolutional coders.

11. Device according to Claim 9 or 10, **characterized in that**
- the at least first coding stage (FC1) is a recursive systematic convolutional coder with an output (O1) for a systematic data sequence and an output (O2) for a redundant data sequence, and **in that** each output (O1, O2) is followed by a controllable puncturing device (P1, P2).

12. Device according to one of Claims 9 to 11, **characterized in that** an interleaver (ILC) is provided on the signal path between the two coding stages (FC1, FC2).

13. Device according to one of Claims 9 to 12, **characterized in that** a further interleaver (IL) is provided behind the second coding stage (FC2) on the signal path.

## Revendications

1. Procédé pour produire un code concaténé en série d'un débit de code prédéterminable destiné à transmettre une information par l'intermédiaire d'un canal, en particulier d'un canal radio, lequel comprend les étapes suivantes :
• acceptation d'un signal d'information à coder ;
• premier codage du signal d'information au moyen d'un premier étage de codage (FC1);
• deuxième codage du signal d'information au moyen d'un deuxième étage de codage (FC2) prévu du côté de la sortie du premier étage de codage (FC1) et
• émission d'un signal d'information codé ayant traversé les deux étages de codage (FC1, FC2),
**caractérisé en ce que**
• le débit de code R du signal d'information codé émis peut être ajusté d'une manière prédéterminée par un ponctuateur (P1, P2) réglable placé dans le trajet des signaux entre les deux étages de codage (FC1, FC2).

2. Procédé selon la revendication 1 **caractérisé en ce que** le réglage du ponctuateur (P1, P2) est réalisé en fonction du service à transmettre.

3. Procédé selon la revendication 1 ou 2 **caractérisé en ce que** le réglage du ponctuateur (P1, P2) est réalisé en fonction d'un signal en réponse caractéristique pour le comportement du récepteur.

4. Procédé selon la revendication 3 **caractérisé en ce qu'**un débit de code R juste suffisant pour assurer un taux d'erreurs sur les bits maximal prédéterminé du côté du récepteur est ajusté grâce au réglage du ponctuateur (P1, P2).

5. Procédé selon l'une des revendications précédentes **caractérisé en ce que** le premier étage de codage (FC1) est un codeur de convolution systématique qui donne une séquence de données systématique et une séquence de données redondantes, avec l'étape :
• ponctuation des deux séquences de données émises.

6. Procédé selon l'une des revendications précédentes **caractérisé en ce que** le signal d'information est constitué de paquets de données pour réaliser une transmission de données par paquets.

7. Procédé selon la revendication 6 **caractérisé en ce que** lorsqu'un paquet est transmis de façon incomplète et/ou fautive par l'intermédiaire du canal, on demande au récepteur une répétition de la transmission de la partie de données du paquet non reçue ou reçue fautivement et que lors de la deuxième transmission réalisée alors seule la partie de données non transmise ou transmise fautivement est de nouveau transmise, un débit de code R plus faible étant alors utilisé.

8. Procédé selon l'une des revendications précédentes **caractérisé en ce qu'**il s'agit pour le code généré d'un turbocode.

9. Installation pour coder un signal d'information à transmettre par l'intermédiaire d'un canal, en particulier d'un canal radio, avec
• un premier étage de codage (FC1) où le signal d'information est soumis à un premier codage et
• un deuxième étage de codage (FC2) qui est placé dans le trajet des signaux derrière le premier étage de codage (FC1) et
• un ponctuateur (P1, P2) réglable placé dans le trajet des signaux au moyen duquel le débit de code R du signal d'information codé émis par l'installation de codage (KC) peut être ajusté d'une manière prédéterminée,
**caractérisée en ce que** le ponctuateur (P1, P2) réglable est placé dans le trajet des signaux entre les deux étages de codage (FC1, FC2).

10. Installation selon la revendication 9 **caractérisée en ce que** les deux étages de codage (FC1, FC2) sont des codeurs de convolution.

11. Installation selon la revendication 9 ou 10 **caractérisée en ce que**
• au moins le premier étage (FC1) est un codeur de convolution systématique récursif avec une sortie (01) pour une séquence de données systématique et avec une sortie (02) pour une séquence de données redondantes et qu'un ponctuateur (P1, P2) réglable est monté en aval de chaque sortie (01, 02).

12. Installation selon l'une des revendications 9 à 11 **caractérisée en ce qu'**un entrelaceur (ILC) est prévu dans le trajet des signaux entre les deux étages de codage (FC1, FC2).

13. Installation selon l'une des revendications 9 à 12 **caractérisée en ce qu'**un autre entrelaceur (IL) est prévu dans le trajet des signaux derrière le deuxième étage de codage (FC2).
